# EUROPEAN PATENT SPECIFICATION

(11) **EP 3 657 226 B1**
(45) Date of publication and mention of the grant of the patent: **04.06.2025**
(21) Application number: 19835346.8
(22) Date of filing: 05.09.2019
(51) Int. Cl.: G02B 6/44, G02B 6/52

(54) **ULTRA-FINE ANTI-ANT AIR-BLOWING OPTICAL CABLE AND MANUFACTURING METHOD THEREFOR**
ULTRAFEINES LUFTBLASENDES KABEL MIT AMEISENSCHUTZ UND HERSTELLUNGSVERFAHREN DAFÜR
CÂBLE OPTIQUE DE TYPE SOUFFLÉ ANTI-FOURMI ULTRA-FIN ET SON PROCÉDÉ DE FABRICATION

(30) Priority: 26.09.2018 CN 201811126517
(43) Date of publication of application: 27.05.2020
(73) Proprietor: Hengtong Optic-Electric Co., Ltd., Suzhou, Jiangsu 215234 (CN)
(72) Inventor: YE, Zhiqiang, Suzhou, Jiangsu 215234 (CN); LIU, Peidong, Suzhou, Jiangsu 215234 (CN); WANG, Yuliang, Suzhou, Jiangsu 215234 (CN); YUE, Haiyin, Suzhou, Jiangsug 215234 (CN); NIE, Zhen, Suzhou, Jiangsu 215234 (CN); CAO, Peng, Suzhou, Jiangsu 215234 (CN); YU, Xuyang, Suzhou, Jiangsu 215234 (CN); ZHU, Congwei, Suzhou, Jiangsu 215234 (CN)
(74) Representative: Chung, Hoi Kan
(86) International application number: PCT/CN2019/104570
(87) International publication number: WO 2020/063292

(56) References cited:
- CN-A- 101 349 789
- CN-A- 103 513 379
- CN-A- 103 823 284
- CN-A- 104 614 828
- CN-A- 107 367 812
- CN-A- 107 861 210
- CN-A- 109 061 822
- CN-U- 206 892 411
- US-A1- 2003 138 226

## Description

### Cross-reference to Related Applications

The present disclosure claims the priority of the Chinese patent application No. 201811126517.X, filed with the Chinese Patent Office on September 26, 2018 and entitled "Superfine Anti-termite Air-blown Optical Cable and Fabrication Method Thereof".

### Technical Field

The present disclosure relates to the field of anti-termite air-blown optical cables, and particularly to a superfine anti-termite air-blown optical cable and a fabrication method thereof.

### Background Art

With the continuous development of network technology, as a communication mode with the highest speed and the best transmission quality, the optical fiber communication is widely used. An optical cable is generally constituted mainly by optical fibers (glass filaments as thin as hair), a plastic protective sleeve and a plastic sheath. The optical cable does not contain metal such as gold, silver, copper and aluminum, and therefore is of no recycling value. In communication construction, communication lines often pass through some areas where termites are active, traditional optical cables are easily nibbled by termites, and finally the optical fibers in the optical cables are broken and communication is interrupted. Therefore, anti-termite optical cables are required.

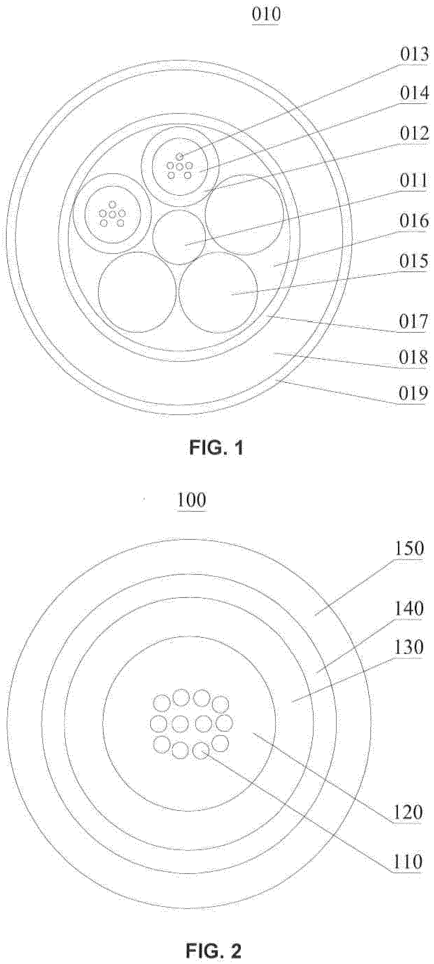

The conventional anti-termite optical cable 010 is generally the GYTS04 type optical cable, which is a layer stranded optical cable with a structure as shown in FIG. 1, comprising a cable core, and a plastic-coated steel strip 017 and an outer sheath sequentially sleeved outside the cable core, wherein the outer sheath is a double-layered outer sheath: a first outer sheath 018 and a second outer sheath 019, the cable core comprises a central reinforcing body 011, and a plurality of loose tubes 012 and cables 015 arranged around the central reinforcing body, a plurality of optical fibers 013 are wrapped in the loose tubes 012, the space between the optical fibers 013 and the loose tubes 012 is filled with a fiber paste 014, and the space among the loose tubes 012, the cables 015 and the plastic-coated steel strip 017 is filled with a cable paste 016. In order to ensure the strength of the optical cable, there are provided a central reinforcing body 011, and loose tubes 012 and cables 015 uniformly disposed around the central reinforcing body 011; and in order to ensure the anti-termite effect, the outer sheath of the optical fibers is provided with a multi-layered structure layer. In the actual use process, the optical cable has a relatively large outer diameter, needs to occupy a relatively large space due to the limitation of the dimension of the minimum installation bending radius, and can be laid in limited scenarios.

With the increasing shortage of pipeline resources and due to the need of anti-termite performance, a superfine anti-termite air-blown optical cable is required to solve the above-mentioned problems. Publication CN 103 513 379 A discloses an optical fiber cable that comprises a loose sleeve in the center and a plurality of glass optical fibers inside the loose sleeve, wherein thixotropic water-proof fiber paste is filled between the loose sleeve and the glass optical fibers.

### Summary

The invention provides a superfine anti-termite air-blown optical cable according to independent claim 1 and a method for fabricating a superfine anti-termite air-blown optical cable according to independent claim 11. Further embodiments are provided by the dependent claims.

The advantageous effects of the embodiments of the present disclosure include: the superfine anti-termite air-blown optical cable of the embodiments of the present disclosure has a high optical fiber density, a small outer diameter, saves laying space and meets the requirement of anti-termite performance. The method for fabricating the superfine anti-termite air-blown optical cable of the embodiments of the present disclosure is a simple method.

### Brief Description of Drawings

In order to more clearly illustrate the technical solutions of the embodiments of the present disclosure, brief description is made below on the drawings required to be used in the embodiments. It should be understood that the following drawings only illustrate some of the embodiments of the present disclosure and thus shall not be regarded as a limitation to the scope, and for a person of ordinary skills in the art, other related drawings may be obtained from these drawings without inventive effort.
FIG. 1 is a schematic structural diagram of a conventional anti-termite optical cable in the prior art;
FIG. 2 is a schematic structural diagram of a superfine anti-termite air-blown optical cable provided by an embodiment of the present disclosure;
FIG. 3 is a schematic structural diagram of another arrangement form of the superfine anti-termite air-blown optical cable provided by an embodiment, not forming part of the claimed invention;
FIG. 4 is a schematic structural diagram of a further arrangement form of the superfine anti-termite air-blown optical cable provided by an embodiment of the present disclosure; and
FIG. 5 is a process flow diagram of the superfine anti-termite air-blown optical cable provided by an embodiment of the present disclosure.

Reference signs: 010-anti-termite optical cable; 011-central reinforcing body; 012-loose tube; 013-optical fiber; 014-fiber paste; 015-cable; 016-cable paste; 017-plastic-coated steel strip; 018-first outer sheath; 019-second outer sheath; 100-superfine anti-termite air-blown optical cable; 110-glass optical fiber; 120-waterproof fiber paste; 130-loose tube; 140-waterproof aramid fiber; 150-outer sheath; 200-superfine anti-termite air-blown optical cable; 220-waterproof yarn; 300-superfine anti-termite air-blown optical cable; and 310-air-blowing groove.

### Detailed Description of Embodiments

In order to make the objects, technical solutions and advantages of the embodiments of the present disclosure clearer, the technical solutions of the embodiments of the present disclosure will be described clearly and completely below with reference to the drawings of the embodiments of the present disclosure. Apparently, the embodiments described are some of the embodiments of the present disclosure, rather than all of the embodiments. The components of the embodiments of the present disclosure described and illustrated in the drawings herein can generally be arranged and designed in a variety of different configurations.

It should be noted that like reference signs and letters denote like items in the following drawings, and therefore, once a certain item is defined in one figure, it does not need to be further defined or explained in the following figures.

In the description of the present disclosure, it should be noted that the orientation or position relation denoted by the terms such as "center", "inner" and "outer" is based on the orientation or position relation indicated by the figures, or refers to the orientation or position relation where the product of the present disclosure is normally placed when in use, which only serves to facilitate describing the present disclosure and simplify the description, rather than indicating or suggesting that the device or element referred to must be in a particular orientation, or is constructed or operated in a particular orientation, and therefore cannot be construed as a limitation on the present disclosure.

In the description of the present disclosure, it should be further noted that unless otherwise explicitly specified and defined, the term "arrange" shall be understood in broad sense, which may, for example, refer to fixed connection, detachable connection or integral connection; may refer to mechanical connection or electrical connection; may refer to direct connection or indirect connection by means of an intermediate medium; and may refer to internal communication between two elements. A person of ordinary skills in the art could understand the specific meaning of the above term in the present disclosure according to specific situations.

Referring to FIG. 2, the present embodiment provides a superfine anti-termite air-blown optical cable 100, i.e., the GCYFXT04 type optical cable, which comprises a loose tube 130 located in the center and an outer sheath 150 sleeved on the loose tube 130, a plurality of colored glass optical fibers 110 being wrapped in the loose tube 130, waterproof fiber paste 120 being filled between the glass optical fibers 110 and the loose tube 130, and a plurality of waterproof aramid fibers 140 being arranged between the loose tube 130 and the outer sheath 150. The superfine anti-termite air-blown optical cable 100 of the present embodiment is a center beam tube type optical cable, which is specifically formed by adding waterproof aramid fibers 140 armor to the exterior of the center beam tube type loose tube 130 and then using a high-hardness outer sheath 150. The superfine anti-termite air-blown optical cable 100 has only two structural layers sleeved outside the glass optical fibers 110, has a high optical fiber density and a small outer diameter, which saves the laying space; the optical cable has good bending performance and a light weight, and can be laid more rapidly and conveniently; and the waterproof fiber paste 120 and waterproof aramid fibers 140 work together to meet the requirements of waterproof and tensile properties.

In the present embodiment, the glass optical fiber 110 may be a single-mode optical fiber or a multimode optical fiber.

In the present embodiment, the waterproof fiber paste 120 is a thixotropic waterproof fiber paste 120 formed by mixing a base oil and a gelling agent, which was specifically purchased from the finished products produced by Shenzhen Xinchanglong New Material Technology Co., Ltd.

In addition, the exterior of the outer sheath may be coated with a water-resistant polyurethane sheath, which can add a waterproof function to the exterior of the outer sheath, and improves the waterproof performance.

Optionally, the waterproof fiber paste 120 is a thixotropic waterproof fiber paste 120 formed by mixing a base oil and a gelling agent, wherein the gelling agent may be a gel in which colloidal particles or polymers in a sol or solution are connected to each other under certain conditions to form a space network structure, wherein the gap in the structure is filled with a liquid serving as a dispersion medium, wherein the liquid may be a gas in the case of xerogel, and xerogel is also referred to as an aerogel.

According to the claimed \invention, the gelling agent is a hot melt adhesive, and the hot melt adhesive is an adhesive with plasticity, whose physical state changes with the change of temperature within a certain temperature range, and whose chemical characteristics do not change; and then the waterproof fiber paste 120 is formed by using the hot melt adhesive and the base oil to fill the gap between the glass optical fibers 110 and the loose tube 130, which improves the overall performance of the optical cable, realizes the small outer diameter and light weight of the optical cable, improves the stability of the optical cable, and is also more user-friendly.

In the present embodiment, the loose tube 130 is a double-layered co-extruded sleeve, specifically made by co-extrusion of polycarbonate and polybutylene terephthalate. In the present embodiment, the loose tube 130 of a 12-core superfine anti-termite air-blown optical cable 100 has an outer diameter of 1.6-2.0 mm; the loose tube 130 of a 24-core superfine anti-termite air-blown optical cable 100 has an outer diameter of 1.9-2.3 mm; and both the loose tubes 130 have a thickness of 0.2-0.4 mm.

In the present embodiment, the waterproof aramid fibers 140 have a linear density of 300-1000 dtex, in the number of 1-3. The pay-off mode is straight pay-off, i.e., arranged in the axial direction.

In the present embodiment, the outer sheath 150 is a nylon sheath, preferably nylon 12 which is a high-hardness sheath material, with excellent anti-termite effect. In the present embodiment, the outer sheath 150 of the 12-core superfine anti-termite air-blown optical cable 100 has an outer diameter of 2.1-2.5 mm; the outer sheath 150 of the 24-core superfine anti-termite air-blown optical cable 100 has an outer diameter of 2.4-2.8 mm; and both the outer sheaths 150 have a thickness of 0.15-0.35 mm.

Compared with the conventional anti-termite optical cable 010, the superfine anti-termite air-blown optical cable 100 of the present embodiment has a small outer diameter and a light weight, and the typical parameters of the superfine anti-termite air-blown optical cable 100 are shown in the table below:

**Table 1 Table of typical parameters of GCYFXT04 optical cable**

| | 12-core | 24-core |
|---|---|---|
| optical cable outer diameter (mm) | 2.1-2.5 | 2.4-2.8 |
| weight (kg/km) | 5.6-6.8 | 7.5-9.1 |
| short-term tensile strength (N) | 40 | 40 |
| short-term crush resistance (N/100mm) | 450 | 450 |

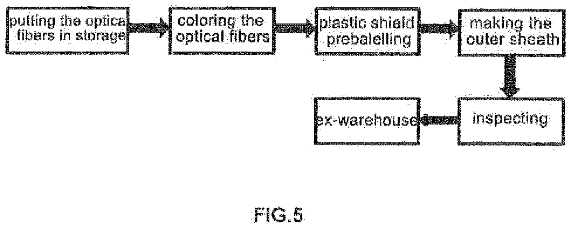

Referring to FIG. 5, the present embodiment further provides a method for fabricating the above-described superfine anti-termite air-blown optical cable 100, comprising the steps of:
a. putting the optical fibers in storage: screening the glass optical fibers 110 to be put in storage, testing the geometric and optical characteristics of the glass optical fibers 110, and selecting glass optical fibers 110 with qualified performance;
b. coloring the optical fibers: coating the glass optical fibers 110 with different colors, wherein a full chromatography or a pilot chromatography may be used, with the requirement that the colored glass optical fibers 110 will not fade away at a high temperature, so as to ensure easy identification during later connection;
c. plastic shield prebalelling: placing colored glass optical fibers 110 in a high-modulus loose tube 130 filled with thixotropic waterproof fiber paste 120 formed by mixing a base oil and a hot melt adhesive, and enabling stable control on surplus length of the glass optical fibers 110 in the loose tube 130 and transmission of the glass optical fibers 110 characteristic by controlling pay-off speed and water tank temperature;
   wherein in the present embodiment, the colored glass optical fibers 110 are placed on an optical fiber pay-off rack, the optical fiber pay-off tension and speed are set, and the pay-off speed is specifically controlled to be 50-100 m/min; the glass optical fibers 110 are led out from the optical fiber pay-off rack, a high-modulus loose tube 130 is made by extrusion through a plastic extruding machine, the high-modulus loose tube 130 is specifically made by a double-layer co-extrusion process, particularly by double-layer co-extrusion of PC+PBT materials, the semi-finished product extruded from the plastic extruding machine is cooled by a water tank, with the temperature of the water tank being controlled to be 35-55 °C;
d. making the sheath: arranging a plurality of waterproof aramid fiber 140 yarns on the outer surface of the loose tube 130, to form a cable core, and then wrapping a single-layered outer sheath 150 around the cable core by the plastic extruding machine; and
e. inspecting for ex-warehouse: randomly selecting each batch of finished optical cables for full performance testing, and packaging the qualified products for ex-warehouse.

When the above-described method is used to fabricate the superfine anti-termite air-blown optical cable 100, a plurality of waterproof aramid fibers 140 are distributed between the loose tube 130 and the outer sheath 150, which can enhance the tensile performance of the optical cable and improve the waterproof performance; the optical cable has a small outer diameter and good resistance to side pressure; and the optical cable has a light weight, and compared with the conventional GYTS04 structure, the outer diameter of the optical cable is reduced by 75.8% and the weight is reduced by 91.7%, which reduces the material consumption, reduces the product cost, and facilitates the promotion and the application of the product.

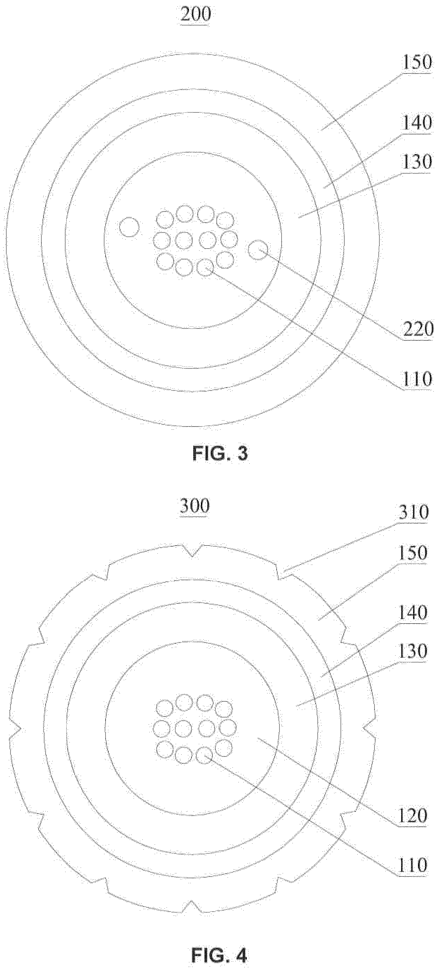

Referring to FIG. 3, the present embodiment, not forming part of the claimed invention, provides a superfine anti-termite air-blown optical cable 200, i.e., the GCYFX04 type optical cable. The superfine anti-termite air-blown optical cable 200 has substantially the same structure as the superfine anti-termite air-blown optical cable 100 of the first embodiment except that waterproof yarns 220 are filled between the glass optical fibers 110 and the loose tube 130.

In the present embodiment, the waterproof yarns 220 have a linear density of 360-660 dtex, in the number of 1-3, which are properly adjusted according to the size of the outer sleeve, and the pay-off mode is straight pay-off, i.e., arranged in the axial direction.

The typical parameters of the superfine anti-termite air-blown optical cable 200 are shown in the table below:

**Table 2 Table of typical parameters of GCYFX04 optical cable**

| | 12-core | 24-core |
|---|---|---|
| optical cable outer diameter (mm) | 2.1-2.5 | 2.4-2.8 |
| weight (kg/km) | 4,6-5.8 | 6.5-8.1 |
| short-term tensile strength (N) | 40 | 40 |
| short-term crush resistance (N/200mm) | 450 | 450 |

The present embodiment, not forming part of the claimed invention, further provides a method for fabricating the above-described superfine anti-termite air-blown optical cable 200. The fabrication method is substantially the same as the fabrication method of the first embodiment except the step c. plastic shield prebalelling: placing colored glass optical fibers 110 and the waterproof yarns 220 simultaneously in a high-modulus loose tube 130, and enabling stable control on surplus length of the glass optical fibers 110 in the loose tube 130 and transmission of the glass optical fibers 110 characteristic by controlling pay-off speed and water tank temperature

Referring to FIG. 4, the present embodiment provides a superfine anti-termite air-blown optical cable 300, which is substantially the same as that of the first embodiment, except that the outer surface of the outer sheath 150 is provided with a plurality of air-blowing grooves 310 arranged in the axial direction. The outer surface of the superfine anti-termite air-blown optical cable 300 is provided with air-blowing grooves 310 to facilitate the implementation of air-blowing laying process, which is specifically as follows:
a cable blowing machine is communicated with one end of a core tube, a high pressure air flow is blown into the core tube by the cable blowing machine, and the high pressure air flow feeds the superfine anti-termite air-blown optical cable 300 into the core tube, the air-blowing grooves 310 on the outer surface of the superfine anti-termite air-blown optical cable 300 can increase the contact area between the optical cable and the air flow so as to improve the air-blowing effect.

In summary, the superfine anti-termite air-blown optical cable of the embodiments of the present disclosure is a center beam tube type optical cable, which has a high optical fiber density, a small outer diameter, saves laying space and meets the requirement of anti-termite performance. The method for fabricating the superfine anti-termite air-blown optical cable of the embodiments of the present disclosure is simple.

### Industrial Applicability

For the superfine anti-termite air-blown optical cable and the fabrication method thereof provided by the embodiments of the present disclosure, the center beam tube type optical cable has a high optical fiber density, a small outer diameter, saves laying space and meets the requirement of anti-termite performance.

## Claims

1. A superfine anti-termite air-blown optical cable (100; 300), comprising a loose tube (130) located in a center of the optical cable (100; 300) and an outer sheath (150) sleeved on the loose tube (130), wherein a plurality of colored glass optical fibers (110) are wrapped in the loose tube (130), a thixotropic waterproof fiber paste (120) is filled between the glass optical fibers (110) and the loose tube (130), and a plurality of waterproof aramid fibers (140) are arranged between the loose tube (130) and the outer sheath (150), **characterized in that** the thixotropic waterproof fiber paste (120) is formed from a hot melt adhesive and a base oil mixed.

2. The superfine anti-termite air-blown optical cable (100; 300) according to claim 1, wherein the loose tube (130) is a double-layered co-extruded sleeve, and made by co-extrusion of polycarbonate and polybutylene terephthalate.

3. The superfine anti-termite air-blown optical cable (100; 300) according to claim 1 or 2, wherein the waterproof aramid fibers (140), in a number of 1-3, have a linear density of 300-1000 dtex.

4. The superfine anti-termite air-blown optical cable (100; 300) according to any one of claims 1-3, wherein the waterproof aramid fibers (140) are arranged in a straight line in an axial direction.

5. The superfine anti-termite air-blown optical cable (100; 300) according to any one of claims 1-4, wherein the outer sheath (150) is a nylon sheath, preferably, being of nylon 12.

6. The superfine anti-termite air-blown optical cable (100; 300) according to any one of claims 1-5, wherein the loose tube (130) of a 12-core optical cable has an outer diameter of 1.6-2.0 mm; the loose tube (130) of a 24-core optical cable has an outer diameter of 1.9-2.3 mm; and the loose tube (130) has a thickness of 0.2-0.4 mm.

7. The superfine anti-termite air-blown optical cable (100; 300) according to any one of claims 1-5, wherein the outer sheath (150) of a 12-core optical cable has an outer diameter of 2.1-2.5 mm; the outer sheath (150) of a 24-core optical cable has an outer diameter of 2.4-2.8 mm; and the outer sheath (150) has a thickness of 0.15-0.35 mm.

8. The superfine anti-termite air-blown optical cable (300) according to any one of claims 1-7, wherein an outer surface of the outer sheath (150) is provided with a plurality of air-blowing grooves (310) arranged in an axial direction.

9. The superfine anti-termite air-blown optical cable (100; 300) according to any one of claims 1-8, wherein each of the glass optical fibers (110) is a single-mode optical fiber or a multimode optical fiber.

10. The superfine anti-termite air-blown optical cable (100; 300) according to any one of claims 1-8, wherein an exterior of the outer sheath (150) is coated with a water-resistant polyurethane sheath.

11. A method for fabricating the superfine anti-termite air-blown optical cable (100; 300) according to any one of claims 1-10, **characterized by** comprising the steps of:
placing colored glass optical fibers (110) in the loose tube (130) filled with the thixotropic waterproof fiber paste (120)formed by mixing a hot melt adhesive and a base oil, and enabling stable control on surplus length of the glass optical fibers (110) in the loose tube (130) and transmission of the glass optical fibers (110), by controlling a pay-off speed and a water tank temperature; and
arranging a plurality of waterproof aramid yarns on an outer surface of the loose tube (130), to form a cable core, and then wrapping the outer sheath (150) around the cable core.

12. The method for fabricating the superfine anti-termite air-blown optical cable (100; 300) according to claim 11, wherein the pay-off speed is 50-100 m/min; and the water tank temperature is 35-55 °C.

13. The method for fabricating the superfine anti-termite air-blown optical cable (100; 300) according to claim 11 or 12, wherein before the step of placing the colored glass optical fibers (110) in the loose tube (130) filled with the thixotropic waterproof fiber paste (120), the method further comprises a step of:
putting the glass optical fibers in storage: screening the glass optical fibers (110) to be put in storage, testing geometric and optical characteristics of the glass optical fibers (110), and selecting the glass optical fibers (110) with a qualified performance.

14. The method for fabricating the superfine anti-termite air-blown optical cable (100; 300) according to claim 13, wherein a step of coloring the glass optical fibers comprises: coating the glass optical fibers (110) with different colors, wherein a full chromatography or a pilot chromatography may be used, with a requirement that the colored glass optical fibers (110) will not fade away at a high temperature, preferably, for finished fabricated optical cables, the method further comprising a step of inspection for ex-warehouse: randomly selecting each batch of the finished fabricated optical cables for a full performance testing, preferably the method further comprising: provide the outer surface of the outer sheath (150) with a plurality of air-blowing grooves (310) arranged in the axial direction, communicate a cable blowing machine with one end of a core tube, and feed the superfine anti-termite air-blown optical cable (300) into the core tube by blowing a high-pressure air flow into the core tube using the cable blowing machine.

## Patentansprüche

1. Superfeines termitensicheres luftgeblasenes optisches Kabel (100; 300), bestehend aus einer losen Röhre (130), die in der Mitte des optischen Kabels (100; 300) angeordnet ist, und einem Außenmantel (150), der auf die lose Röhre (130) aufgesteckt ist, wobei mehrere farbige optische Glasfasern (110) in der losen Röhre (130) eingewickelt sind, eine thixotrope wasserdichte Faserpaste (120) zwischen den optischen Glasfasern (110) und der losen Röhre (130) gefüllt ist, und mehrere wasserdichte Aramid-Fasern (140) zwischen der losen Röhre (130) und dem Außenmantel (150) angeordnet sind, **dadurch gekennzeichnet, dass** die thixotrope wasserdichte Faserpaste (120) aus einem gemischten Schmelzklebstoff und Basisöl gebildet ist.

2. Superfeines termitensicheres luftgeblasenes optisches Kabel (100; 300) nach Anspruch 1, wobei die lose Röhre (130) eine doppelschichtige co-extrudierte Hülle ist, und durch Co-Extrusion von Polycarbonat und Polybutylenterephthalat hergestellt ist.

3. Superfeines termitensicheres luftgeblasenes optisches Kabel (100; 300) nach Anspruch 1 oder 2, wobei die wasserdichten Aramid-Fasern (140), in einer Anzahl von 1-3, eine lineare Dichte von 300-1000 dtex aufweisen.

4. Superfeines termitensicheres luftgeblasenes optisches Kabel (100; 300) nach einem der Ansprüche 1-3, wobei die wasserdichten Aramid-Fasern (140) in einer geraden Linie in axialer Richtung angeordnet sind.

5. Superfeines termitensicheres luftgeblasenes optisches Kabel (100; 300) nach einem der Ansprüche 1-4, wobei der Außenmantel (150) ein Nylonmantel ist, vorzugsweise, Nylon 12 ist.

6. Superfeines termitensicheres luftgeblasenes optisches Kabel (100; 300) nach einem der Ansprüche 1-5, wobei die Lose Röhre (130) eines 12-adrigen optischen Kabels einen Außendurchmesser von 1,6-2,0 mm aufweist; die Lose Röhre (130) eines 24-adrigen optischen Kabels einen Außendurchmesser von 1,9-2,3 mm aufweist; und die Lose Röhre (130) eine Dicke von 0,2-0,4 mm aufweist.

7. Superfeines termitensicheres luftgeblasenes optisches Kabel (100; 300) nach einem der Ansprüche 1-5, wobei der Außenmantel (150) eines 12-adrigen optischen Kabels einen Außendurchmesser von 2,1-2,5 mm aufweist; der Außenmantel (150) eines 24-adrigen optischen Kabels einen Außendurchmesser von 2,4-2,8 mm aufweist; und der Außenmantel (150) eine Dicke von 0,15-0,35 mm aufweist.

8. Superfeines termitensicheres luftgeblasenes optisches Kabel (100; 300) nach einem der Ansprüche 1-7, wobei eine Außenfläche des Außenmantels (150) mit mehreren in axialer Richtung angeordneten Einblasrillen (310) versehen ist.

9. Superfeines termitensicheres luftgeblasenes optisches Kabel (100; 300) nach einem der Ansprüche 1-8, wobei jede der optischen Glasfasern (110) eine optische Singlemode-Faser oder eine optische Multimode-Faser ist.

10. Superfeines termitensicheres luftgeblasenes optisches Kabel (100; 300) nach einem der Ansprüche 1-8, wobei die Außenseite des Außenmantels (150) mit einem wasserbeständigen Polyurethanmantel beschichtet ist.

11. Verfahren zur Herstellung des superfeinen termitensicheren luftgeblasenen optischen Kabels (100; 300) nach einem der Ansprüche 1-10, **dadurch gekennzeichnet, dass** das Verfahren die folgenden Schritte umfasst:
- Platzieren von farbigen optischen Glasfasern (110) in der losen Röhre (130), die mit der thixotropen wasserdichten Faserpaste (120) gefüllt ist, welche durch Mischen eines Heißschmelzklebstoffs und eines Basisöls hergestellt wird,
- und Ermöglichen einer stabilen Kontrolle der Überlänge der optischen Glasfasern (110) in der losen Röhre (130) sowie der Übertragung der optischen Glasfasern (110) durch Steuerung der Abwickelgeschwindigkeit und der Wassertanktemperatur; und
- Anordnen einer Vielzahl von wasserdichten Aramid-Fasern auf einer Außenfläche der losen Röhre (130), um einen Kabelkern zu bilden, und anschließendes Umwickeln des Kabelkerns mit dem Außenmantel (150).

12. Verfahren zur Herstellung des superfeinen termitensicheren luftgeblasenen optischen Kabels (100; 300) nach Anspruch 11, wobei die Abwickelgeschwindigkeit 50-100 m/min beträgt und die Wassertanktemperatur 35-55 °C beträgt.

13. Verfahren zur Herstellung des superfeinen termitensicheren luftgeblasenen optischen Kabels (100; 300) nach Anspruch 11 oder 12, wobei vor dem Schritt des Platzierens von farbigen optischen Glasfasern (110) in der mit thixotroper wasserdichter Faserpaste (120) gefüllten losen Röhre (130), das Verfahren weiterhin einen Schritt umfasst:
- Einlagern der optischen Glasfasern: Überprüfung der einzulagernden optischen Glasfasern (110), Testen der geometrischen und optischen Eigenschaften der optischen Glasfasern (110) und Auswählen der optischen Glasfasern (110) mit qualifizierter Leistungsfähigkeit.

14. Verfahren zur Herstellung des superfeinen termitensicheren luftgeblasenen optischen Kabels (100; 300) nach Anspruch 13, wobei ein Schritt des Färbens der optischen Glasfasern umfasst: Beschichten der optischen Glasfasern (110) mit verschiedenen Farben, wobei eine vollständige Chromatographie oder eine Pilot-Chromatographie verwendet werden kann, mit der Anforderung, dass die gefärbten optischen Glasfasern (110) bei hoher Temperatur nicht verblassen,
- vorzugsweise, für fertig hergestellte optische Kabel, das Verfahren weiter einen Schritt der Inspektion vor dem Verlassen des Lagers umfasst: zufälliges Auswählen jeder Charge der fertig hergestellten optischen Kabel für eine vollständige Leistungsprüfung,
- vorzugsweise das Verfahren weiterhin umfasst: Versehen der Außenfläche des Außenmantels (150) mit einer Vielzahl von in axialer Richtung angeordneten Einblasrillen (310), Verbinden einer Kabeleinblasmaschine mit einem Ende eines Kernrohrs und Einführen des superfeinen termitensicheren luftgeblasenen optischen Kabels (300) in das Kernrohr durch Einblasen eines Hochdruckluftstroms in das Kernrohr mittels der Kabeleinblasmaschine.

## Revendications

1. Câble optique anti-termites soufflé à l'air superfin (100 ; 300), comprenant un tube lâche (130) situé au centre du câble optique (100 ; 300) et une gaine extérieure (150) enveloppant le tube lâche (130), dans lequel une pluralité de fibres optiques en verre colorées (110) sont enroulées dans le tube lâche (130), une pâte fibreuse étanche thixotrope (120) est remplie entre les fibres optiques en verre (110) et le tube lâche (130), et une pluralité de fibres d'aramide étanches (140) sont disposées entre le tube lâche (130) et la gaine extérieure (150), **caractérisé en ce que** ladite pâte fibreuse étanche thixotrope (120) est formée d'un mélange d'adhésif thermofusible et d'huile de base.

2. Câble optique anti-termites soufflé à l'air superfin (100 ; 300) selon la revendication 1, dans lequel le tube lâche (130) est un manchon co-extrudé bicouche,
réalisé par co-extrusion de polycarbonate et de téréphtalate de polybutylène.

3. Câble optique anti-termites soufflé à l'air superfin (100 ; 300) selon la revendication 1 ou 2, dans lequel les fibres d'aramide étanches (140), en nombre de 1 à 3, pré sentent une densité linéique de 300 à 1000 dtex.

4. Câble optique anti-termites soufflé à l'air superfin (100 ; 300) selon l'une quelconque des revendications 1 à 3, dans lequel les fibres d'aramide étanches (140) sont disposées en ligne droite dans une direction axiale.

5. Câble optique anti-termites soufflé à l'air superfin (100 ; 300) selon l'une quelconque des revendications 1 à 4, dans lequel la gaine extérieure (150) est une gaine en nylon, de préférence en nylon 12.

6. Câble optique anti-termites soufflé à l'air superfin (100 ; 300) selon l'une quelconque des revendications 1 à 5, dans lequel le tube lâche (130) d'un câble optique 12 âmes a un diamètre Extérieur de 1,6 à 2,0 mm ; le tube lâche (130) d'un câble optique 24 âmes a un diamètre extérieur de 1,9 à 2,3 mm ; et le tube lâche (130) a une épaisseur de 0,2 à 0,4 mm.

7. Câble optique anti-termites soufflé à l'air superfin (100 ; 300) selon l'une quelconque des revendications 1 à 5, dans lequel la gaine extérieure (150) d'un câble optique à 12 âmes a un diamètre extérieur de 2,1 à 2,5 mm ; la gaine extérieure (150) d'un câble optique à 24 âmes a un diamètre extérieur de 2,4 à 2,8 mm ; et la gaine extérieure (150) a une épaisseur de 0,15 à 0,35 mm.

8. Câble optique anti-termites soufflé à l'air superfin (100; 300) selon l'une quelconque des revendications 1 à 7, dans lequel une surface extérieure de la gaine extérieure (150) est pourvue d'une pluralité de rainures de soufflage d'air (310) disposé es dans une direction axiale.

9. Câble optique anti-termites soufflé à l'air superfin (100 ; 300) selon l'une quelconque des revendications 1 à 8, dans lequel chaque fibre optique en verre (110) est une fibre unimodale ou multimodale.

10. Câble optique anti-termites soufflé à l'air superfin (100 ; 300) selon l'une quelconque des revendications 1 à 8, dans lequel un extérieur de la gaine extérieure (150) est recouvert d'une gaine en polyuréthane résistant à l'eau.

11. Procédé de fabrication du câble optique anti-termites soufflé à l'air superfin (100 ; 300) selon l'une quelconque des revendications 1 à 10, **caractérisé par** les étapes suivantes :
• placement des fibres optiques en verre colorées (110) dans le tube lâche (130) rempli de la pâte fibreuse étanche thixotrope (120) formée en mélangeant l'adhésif thermofusible et l'huile de base ;
• contrôle stable de la longueur excédentaire des fibres optiques en verre (110) dans le tube lâche (130) et de la transmission des caractéristiques des fibres optiques (110), par réglage d'une vitesse de déroulage et d'une température de bain d'eau ;
• disposition d'une pluralité de fils d'aramide étanches sur une surface extérieure du tube lâche (130) pour former un âme de câble, puis enveloppement de la gaine extérieure (150) autour de l'âme de câble.

12. Procédé de fabrication du câble optique anti-termites soufflé à l'air superfin (100 ; 300) selon la revendication 11, dans lequel la vitesse de déroulage est de 50 à 100 m/min ; et la température du bain d'eau est de 35 à 55 °C.

13. Procédé de fabrication du câble optique anti-termites soufflé à l'air superfin (100 ; 300) selon la revendication 11 ou 12, comprenant en outre, avant l'étape de placement des fibres optiques en verre colorées (110), une étape de :
• stockage des fibres optiques en verre : criblage des fibres optiques en verre (110) à stocker, vérification de leurs caractéristiques géométriques et optiques, et sélection des fibres optiques en verre (110) présentant des performances conformes.

14. Procédé de fabrication du câble optique anti-termites soufflé à l'air superfin (100 ; 300) selon la revendication 13, dans lequel une étape de coloration des fibres optiques en verre comprend :
• revêtement des fibres optiques en verre (110) avec différentes couleurs, en utilisant une chromatographie complète ou pilote, avec une exigence que les fibres colorées (110) ne se décolorent pas à haute température ;
de préférence, pour les câbles optiques fabriqués finis, le procédé comprenant en outre une étape d'inspection avant expédition : tests complets de performance sur des lots sélectionnés aléatoirement.
De préférence, le procédé comprenant en outre :
• formation des rainures de soufflage d'air (310) sur la surface extérieure de la gaine extérieure (150) dans une direction axiale ;
• connexion d'une machine de soufflage de câble à une extrémité d'un tube central ;
• alimentation du câble optique anti-termites soufflé à l'air superfin (300) dans le tube central par insufflation d'un flux d'air haute pression via la machine de soufflage.
